# EUROPEAN PATENT SPECIFICATION

(11) **EP 2 803 264 B1**
(45) Date of publication and mention of the grant of the patent: **30.03.2016**
(21) Application number: 14163647.2
(22) Date of filing: 04.04.2014
(51) Int. Cl.: A01M 1/20

(54) **Feeding trap for insects**
Futterfalle für Insekten
Introduction de piège pour insectes

(30) Priority: 04.04.2013 ES 201330400 U
(43) Date of publication of application: 19.11.2014
(73) Proprietor: Zyxtudio diseño e innovación SL, 46003 Valencia (ES)
(72) Inventor: Blasco Feo, Vicente, 46003 Valencia (ES)
(74) Representative: Soler Lerma, Santiago

(56) References cited:
- EP-A1- 0 793 913
- US-A- 4 563 836
- US-A- 4 793 093
- US-A- 4 837 969
- US-A1- 2006 191 189

## Description

The present invention relates to a feeding trap for insects, particularly for large insects such as cockroaches.

The trap is of the type comprising a casing with bait inside it, the casing having orifices to connect the interior and exterior allowing the insect to enter it to eat and then exit, or even several insects to simultaneously eat the bait without inconveniencing one another, wherein the bait is in a container that prevents accidental access to it.

### BACKGROUND OF THE INVENTION

One of the most popular and effective methods used to combat crawling insects is using a bait that is generally placed near the areas where the insects are often present, such that following their usual feeding habits the insects will feed on the poisonous bait and take part of the same with them back to their nests, where it will be shared with other insects, preferably with the queen, thereby killing a great number of insects.

Different devices are known, generally known as insect feeding traps or stations.

The most widely used ones have a base with a shape that leads the insects to the bait and a cover over said base to define a closed feeding station.

Typical examples of this are disclosed in patents US4563836, of Woodruff, or US4837969, of Demarest.

The base of all of the traps disclosed in the aforementioned patents consists of a unitary piece made of a plastic material in the form of a relatively thin and deformable sheet or film, using walls or conduits formed entirely as part of the base to lead the insects to the trap, and a cover closing the top part of the assembly without obstructing the conduits through which the insects pass.

In both patents the bait is in an internal central position and placed in a container that helps keep it in place in case of potential movement of the trap, as well as hindering access to children.

Patent US4563836 of Woodruff the cover rests cover rests only on the walls and has limitations regarding the load it can support, presenting a high risk of collapse.

In the Demarest patent the base includes several support features projecting upward, while the cover also provides the outer side walls of the trap, such that the cover is a casing that fits snugly on the underlying support structures of the base and interacts with the same.

The access doors used by the insects to enter the Demarest traps are not formed as openings in or between the walls that rise from a base, but are instead orifices or openings made in the segment of the cover that constitutes the casing, thereby increasing the solidity of the assembly such that it can withstand certain loads on it without crushing, although to maintain solidity the insect accesses and exits are limited exclusively to said orifices, which have a limited size to prevent affecting the strength of the assembly.

A good operation of the feeding trap requires the bait to be in a central position during its use.

Patent US4793093 of Gentile includes a solution for keeping the bait in the central container.

Said patent illustrates a trap made of a thin plastic material with a base having a central well in which to place the bait, and a cover including a bowl-shaped member facing downward, which protrudes internally against the top part of the bait to help keep the same in the central well.

However, the bowl-shaped member facing downward does not provide strength against crushing, as it rests directly on the bait in the well.

Instead, resistance to crushing is provided by the side walls, which rest on the top surface of a peripheral wall of the base.

To overcome the aforementioned problems, the trap of Utility Model ES1078167U was designed. One of the aims of this trap is to provide safety.

For safety purposes, the bait must not be reachable by anyone except the insects that enter the trap, which is achieved by defining a shape for the trap that hinders involuntary access to the bait, such as by a child's fingers.

For this purpose, the bait is placed in an inner crater, which can be accessed through side openings with a size that promotes the dispersion of the chemical substances of the bait and access by insects, but with dimensions that may compromise safety, as it is possible in principle to reach the bait through these openings.

### DESCRIPTION OF THE INVENTION

To solve the aforementioned drawbacks, the insect feeding trap disclosed comprises a splitter at each of its accesses.

The splitter is placed in the central part of each access and comprises a body that rises from the base to the lower face of the cover.

This maintains the ventilation characteristics that favor dispersion of the chemical substances of the bait, as well as large access spaces to the same, but introduces an obstacle that prevents involuntary access.

### BRIEF DESCRIPTION OF THE DRAWINGS

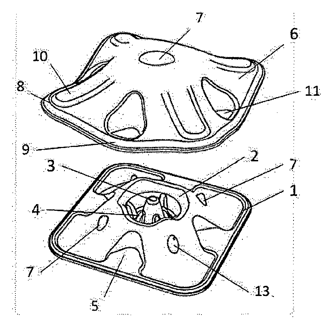

**FIGURE 1** shows an exploded view of the trap, without the bait to allow its details to be appreciated, in which can be seen the base (1) with its central crater (2) that houses a pillar (3) and internal ribs (4), and is also provided with contact points (5) specifically meant to be joined to the cover (6), preferably by heat welding, as well as some protrusions (13).
Figure 1 also shows the cover (6) with a central cupola (7) and some peripheral flanges presenting raised areas (8) and recessed areas (9), the raised areas having radial ribs (10) and the recessed areas having notches (11) meant to rest on and be fixed on the contact points (5).

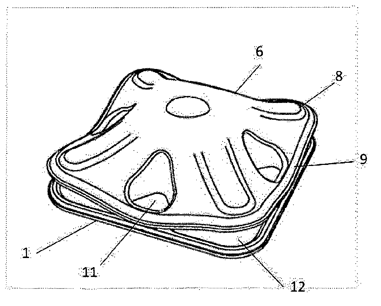

**FIGURE 2** shows the assembled device, with the base (1) and cover (6) joined by the notches (11) of the recessed areas (9) and the raised areas (8) of the cover (6) being located at a certain distance from the base, thereby defining gaps (12) allowing access to the interior.

### DESCRIPTION OF A PREFERRED EMBODIMENT

A non-limiting embodiment of the invention is described below for purposes of illustration only of the technical solutions achieved; any other embodiment including said solutions will also fall under the protection of this document.

The trap comprises a base and a cover wherein:
The base (1) comprises a film of plastic material in the shape of a square with rounded corners, its central part raised above the rest to form a crater (2) inside which rises a pillar (3) that extends above the height of the crater mouth, and a series of ribs (4) inside the crater. The base also has recessed areas (5) with a smooth surface.

The cover (6) has a mushroom shape, with a central cupola (7) and an essentially square and wavy perimeter, such that raised areas (8) and recessed areas (9) alternative, the raised areas coinciding with the corners of the square and the recessed areas with the sides of the same.

The cover (6) and the base (1) are heat welded, as the notches in the cover (11) and the contact points (5) match, as well as by clipping when the top end of the pillar (3) is inserted in a housing (13) provided on the inner part of the cupola of the cover.

The wavy shape of the cover defines a number of gaps (12) that allow and direct entry into the trap, specifically to the crater (2) in which the bait is placed.

These access conduits or gaps defined by the wavy shape of the cover are provided with vertical trunco-conical protrusions that split the free space of the access conduits.

The large gaps (12) allow excellent ventilation inside the trap, favoring dispersion of the attractive substances.

## Claims

1. **INSECT TRAP** of the type incorporating a bait inside a structure that the insect can enter through some openings, wherein said structure comprises a base and a cover that are fixed one to the other wherein the base (1) comprises a film of plastic material with its central part raising above the rest to form a crater (2) inside which rises a pillar (3) that extends above the height of the crater mouth, and a series of ribs (4) inside the crater, having the base also recessed areas (5) with a smooth surface, and wherein the cover (6) has a mushroom shape with a central cupola (7) and wavy perimeter, that perimeter comprising alternating raised areas (8) and recessed areas (9) , wherein those alternating raised and recessed areas define gaps (12) for accessing the interior, **characterized in that** it comprises a series of protrusions (13) arranged in the gaps (12) that are the passage conduits into the structure.

2. **INSECT TRAP** according to claim 1, **characterized in that** said protrusions reach from the base (1) to the cover (6).

3. **INSECT TRAP** according to claim 1, **characterized in that** said protrusions have a trunco-conical shape.

## Patentansprüche

1. **INSEKTENFALLE** mit Köder im Inneren einer Struktur, in dessen Innenraum Insekten durch Öffnungen gelangen können und die aus einem Bodenteil und einer an diesem Teil befestigten Abdeckung besteht, wobei der Boden (1) einen Kunststoffüberzug besitzt, dessen mittlerer Teil über den Rest herausragt und einen Krater (2) bildet, in dessen Mitte sich ein Pfosten (3) erhebt, der die Höhe der Krateröffnung übersteigt, während in das Kraterinnere einige Lamellen (4) eingelassen sind, wobei auch im Bodenteil einige Aussparungen (5) mit glatter Oberfläche angebracht sind und die pilzförmige Abdeckung (6) eine zentrale Kuppel (7) und einen welligen Umfang besitzt, an dem sich erhobene (8) und zurückstehende (9) Abschnitte abwechseln, zwischen welchen sich Öffnungen (12) bilden, durch die der Innenraum zugänglich ist, **dadurch gekennzeichnet, dass** in diesen Öffnungen (12) eine Reihe von Ausbuchtungen (13) derart eingelassen sind, dass sie den Weg ins Innere der Struktur vorgeben.

2. **INSEKTENFALLE** nach Anspruch 1, **dadurch gekennzeichnet, dass** die genannten Ausbuchtungen vom Bodenteil (1) zur Abdeckung (6) führen.

3. **INSEKTENFALLE** nach Anspruch 1, **dadurch gekennzeichnet, dass** die besagten Ausbuchtungen von länglich-konischer Form sind.

## Revendications

1. **PIÈGE À INSECTES** du type contenant un appât à l'intérieur d'une structure dans laquelle l'insecte peut entrer à travers certaines ouvertures, dans lequel ladite structure comprend une base et un couvercle qui sont fixés l'un à l'autre, dans lequel la base (1) comprend un film de matériau plastique, avec sa partie centrale s'élevant au-dessus du reste afin de former un cratère (2) à l'intérieur duquel s'élève un pilier (3) qui s'étend au-dessus de la hauteur de l'embouchure du cratère, ainsi qu'une série de nervures (4) à l'intérieur du cratère, la base ayant également des zones évidées (5) avec une surface lisse et dans lequel le couvercle (6) présente une forme de champignon avec une coupole centrale (7) et un périmètre ondulé, lequel périmètre comprend, en alternance, des zones élevées (8) et des zones évidées (9), dans lequel ces zones élevées et évidées en alternance définissent des espaces (12) afin d'accéder à l'intérieur, **caractérisé en ce qu'**il comprend une série de saillies (13) agencées dans les espaces (12) qui sont les conduits de passage dans la structure.

2. **PIÈGE À INSECTES** selon la revendication 1, **caractérisé en ce que** lesdites saillies s'étendent depuis la base (1) jusqu'au couvercle (6).

3. **PIÈGE À INSECTES** selon la revendication 1, **caractérisé en ce que** lesdites saillies ont une forme de cône tronqué.
